# EUROPEAN PATENT SPECIFICATION

(11) **EP 2 749 115 B1**
(45) Date of publication and mention of the grant of the patent: **19.04.2017**
(21) Application number: 11876349.9
(22) Date of filing: 25.11.2011
(51) Int. Cl.: H04W 76/04, H04W 52/02

(54) **CONTROLLING TRANSITIONS BETWEEN RADIO RESOURCE CONTROL (RRC) STATES**
STEUERUNG VON ÜBERGÄNGEN ZWISCHEN FUNKRESSOURCENSTEUERUNGSZUSTÄNDEN
COMMANDE DE TRANSITIONS ENTRE DES ÉTATS DE COMMANDE DE RESSOURCES RADIOÉLECTRIQUES

(43) Date of publication of application: 02.07.2014
(73) Proprietor: Telefonaktiebolaget LM Ericsson (publ), 164 83 Stockholm (SE)
(72) Inventor: HANNU, Hans, S-97631 Luleå (SE); CHRISTOFFERSSON, Jan, S-97596 Luleå (SE)
(74) Representative: Boco IP Oy Ab
(86) International application number: PCT/SE2011/051428
(87) International publication number: WO 2013/077792

(56) References cited:
- EP-A1- 2 061 192
- EP-A2- 1 589 403
- Daniel Crespo Ramirez: "Smartphone traffic patterns", , 17 July 2011 (2011-07-17), XP055069991, Retrieved from the Internet: URL:http://kth.diva-portal.org/smash/get/d iva2:507877/FULLTEXT01.pdf [retrieved on 2013-07-05]
- FENG QIAN ET AL: "TOP: Tail Optimization Protocol For Cellular Radio Resource Allocation", NETWORK PROTOCOLS (ICNP), 2010 18TH IEEE INTERNATIONAL CONFERENCE ON, IEEE, 5 October 2010 (2010-10-05), pages 285-294, XP031864737, DOI: 10.1109/ICNP.2010.5762777 ISBN: 978-1-4244-8644-1
- DANIEL CRESPO RAMIREZ: 'Smartphone traffic patterns' DEGREE PROJECT IN COMMUNICATION SYSTEMS SECOND LEVEL, 30.0 HEC, [Online] 17 July 2011, STOCKHOLM, SWEDEN, XP055069991 Retrieved from the Internet: <URL:http://kth.diva- portal.org/smash/record.jsf?pid=diva2:50787 7&rvn=1>

## Description

This application is related to United States Provisional Patent application 61/544,205, filed October 6, 2011, entitled DYNAMIC RADIO RESOURCE CONTROL STATE SWITCHING.

### TECHNICAL FIELD

This invention pertains to telecommunications, and particularly to a method of operating a node of a radio access network and to a node of a radio access network for governing the transitioning between radio resource control (RRC) states or channels for a wireless terminal or user equipment unit (UE).

### BACKGROUND

In a typical cellular radio system, wireless terminals, also known as mobile stations and/or user equipment units (UEs), communicate via a radio access network (RAN) to one or more core networks. The radio access network covers a geographical area which is divided into cell areas, with each cell area being served by a base station, e.g., a radio base station (RBS), which in some networks may also be called, for example, a "NodeB" (UMTS) or "eNodeB" (LTE). A cell is a geographical area where radio coverage is provided by the radio base station equipment at a base station site. Each cell is identified by an identity within the local radio area, which is broadcasted in the cell. Another identity identifying the cell is also broadcasted in the cell. The base stations communicate over the air interface operating on radio frequencies with the user equipment units (UE) within range of the base stations.

In some versions of the radio access network, several base stations are typically connected, e.g., by landlines or microwave, to a controller node, such as a radio network controller (RNC) or a base station controller (BSC), which supervises and coordinates various activities of the plural base stations connected thereto. The radio network controllers are typically connected to one or more core networks.

The Universal Mobile Telecommunications System (UMTS) is a third generation mobile communication system, which evolved from the second generation (2G) Global System for Mobile Communications (GSM). The UMTS terrestrial radio access network (UTRAN) is essentially a radio access network using wideband code division multiple access for user equipment units (UEs). In a forum known as the Third Generation Partnership Project (3GPP), telecommunications suppliers propose and agree upon standards for third generation networks and UTRAN specifically, and investigate enhanced data rate and radio capacity.

Mobile telecommunications systems are normally statically configured with a parameter set defining the behavior of the system. The systems are based on standards which define radio bearers to carry traffic with different characteristics, e.g. speech, streaming video, or packet data. Standards such as the 3GPP standards referenced above also define different UE/RRC states. See, for example, 3GPP TS 25.331 V10.4.0 (2011-06), 3rd Generation Partnership Project; Technical Specification Group Radio Access Network; Radio Resource Control (RRC); Protocol specification (Release 10), incorporated herein by reference, which describes states such as CELL_DCH state, CELL_FACH state, CELL_PCH state, URA_PCH state, and the Idle state URA_PCH state. These names of these states are understood in view of the following channels/areas: Dedicated Channel (DCH); Forward Access Channel (FACH); Random Access Channel (RACH); UTRAN registration area (URA_PCH).

For each wireless terminal in the connected mode, a node of the radio access network, such as a radio network controller (RNC) node, determines in which of these states the wireless terminal operates. Whichever of the UE/RRC states a wireless terminal currently is in has consequences which affect, e.g., the UE battery consumption and the resource consumption in the mobile network.

For UTRAN (WCDMA) in particular the 3GPP standard defines the Radio Access Bearer (RAB) to carry the services, where the Interactive RAB is specified for best effort traffic. The 3GPP standard also defines UE/RRC states such as CELL_DCH, CELL_FACH, CELL_PCH, and URA_PCH, mentioned above.

Packet data services have escalated, particularly with the introduction of wireless terminals in the form of devices such as Smartphones, and with personal computers (PCs) now widely participating in the mobile networks. Most of the packet traffic is based on the internet protocol (IP), e.g., internet services, and is normally treated as best effort traffic in the mobile network. Internet services are of many types and different characteristics, e.g. web browsing, chat, email, file sharing, and video streaming.

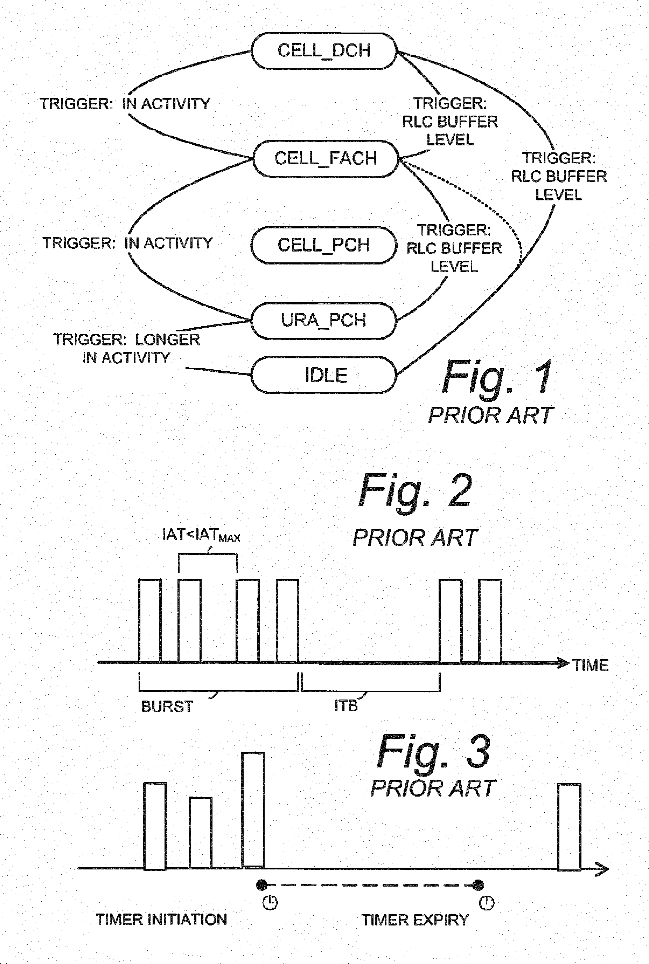

Within an Internet Protocol (IP) flow there are typically times of activity and times of inactivity. Periods of activity will be separated by times of inactivity of different length. Within the IP flow, a burst may for example be defined by IP packets arriving with a maximum inter-arrival time (IATₘₐₓ). The Idle Time Between bursts (ITB) is defined as the time between the last packet in one burst and the first packet of the next. A burst, inter-arrival time (IAT), and Idle Time Between bursts (ITB) are illustrated in Fig. 2.

As mentioned above, a radio access network node such as the radio network controller keeps track of the UE/RRC state in which a wireless terminal is currently operating and also governs the transition of the wireless terminal between UE/RRC states. In other words, the radio network controller determines when a wireless terminal should transition from one UE/RRC state to another state. Parameters to govern the transition between UE/RRC states are normally timer based. Fig. 3 generally depicts that, when switching to a higher state, a wireless terminal may be required to transition from one UE/RRC state to another UE/RRC state upon expiration of a timer. The timer may be activated or initiated by some UE-related network activity, e.g. forwarding of an IP packet to/from the UE. The timer may expire due to some UE-related inactivity, e.g., no IP packet forwarded to/from the UE. Expiration of the timer may prompt the transition from one UE/RRC state to another UE/RRC state. Transfer to a state of higher activity is normally transmission-triggered, e.g., filling of a buffer.

High Speed Packet Access (HSPA) generally employs two mobile telephony protocols, High Speed Downlink Packet Access (HSDPA) and High Speed Uplink Packet Access (HSUPA), and as such extends and improves the performance of existing WCDMA protocols. With HSPA it is now possible to provide mobile broadband since the peak bit rates reach up to 42 Mbps (3GPP R8) in downlink, and 11 Mbps (3GPP R8) in uplink. For 3GPP R9 the peak rates are doubled. Thus, HSPA may be seen as a complement and replacement to other broad band access such as Asymmetric Digital Subscriber Line (ADSL).

As mentioned above and illustrated in Fig. 1, the Idle, Cell_DCH, Cell_FACH, URA_PCH, and Cell_PCH are the five RRC protocol states. Data transfer between the terminal and the network is only possible in Cell_FACH and Cell_DCH states. The Cell_DCH state is characterized by dedicated channels in both the uplink and the downlink. This corresponds to continuous transmission and reception and has the highest battery consumption. The Cell_FACH state does not use dedicated channels and thus allows lower battery consumption, at the expense of a lower uplink and downlink throughput. Thus, in addition to showing the RRC states, Fig. 1 also shows serves as an example state transition diagram. As understood from Fig. 1, the system typically does state transition due to amount of data in the RLC send buffers and due to the length of transmission inactivity.

In the example state transition diagram of Fig. 1, down-switch from CELL_DCH is based on inactivity timers. These may be set differently depending on traffic types, based on RNC load, with respect to UE power consumption or even specifically per user. A different approach is to use adaptive channel switching by predicting the time until the next data activity, i.e. to predict the inter-arrival time (IAT) between data bursts. Examples of adaptive channel switching are described, e.g., in US provisional patent application 61/544205, filed October 6, 2011, entitled "DYNAMIC RADIO RESOURCE CONTROL STATE SWITCHING.

There is a difference in processor load for the RNC associated with staying in the different states and to switch between the states. The load of residing in CELL_DCH may be approximately 40 times that of staying in one of the lower states, e.g. CELL_FACH or URA_PCH. Hence from the RNC perspective, it is most efficient to avoid CELL_DCH except when needed due to requirements on data transmission rate. However, since there is also a processor load associated with switching, downswitching is not economical unless the UE may stay in the lower state for a certain time (depending on the specific RNC load implication).

The current or state-of-the-art solution is to base the decision of when to down-switch to a lower state on idle time which is executed when the associated down-switch timer expires, as illustrated by way of example in Fig. 3. This solution has several drawbacks which are, e.g., associated with the random nature of IAT or when the next data activity will occur. One such drawback is the probability that there is a long time until next data activity when the down-switch timer expires may be varying between applications, users etc. This implies that using down-switch timers is an inexact method to determine an optimal down-switch time. Another drawback is that adaptive channel switching techniques which use a prediction of the time to next data activity are also inexact in the sense that predictions are not always correct. That is, there is always a probability that an erroneous prediction is made.

In the above regard, of special importance is the case when the switching decision is to down-switch, either because of an expired timer or a long predicted IAT. If this decision is erroneous, the result is a considerable and unnecessary load caused by a down-switch and the following immediate up-switch. Avoiding this error is important in order to minimize the RNC load. A second type of error is when the down-switch is delayed, either by a too long down-switch timer or erroneous prediction.

Hence, due to the random nature of the IATs or time to next data activity, it is impossible to reach the theoretical optimal performance, i.e., the minimum possible RNC load given a trace of IATs. This cannot be avoided since the IAT are not known when the switching decision is taken. However, optimizing the prediction and decision taking is of considerable importance to minimize RNC load at a given traffic load.

"Smartphone traffic patterns": Daniel Crespo Ramirez, XP055069991 discusses about identifying and characterizing patterns in data traffic generated by smartphone terminals in 3G mobile networks based on utilization of logs of user data packets captured. An abstraction called a "packet burst" is utilized, which allows to describe the flow of events in the traffic of each user clearly. Once the events are identified, the possibility of predicting the next event in the traffic of a specific user, based on past events in this user's traffic, is determined. Due to strong correlations in these events, the predictions are made with an acceptable accuracy. The effect of differences in estimating an accuracy of predicting a next event in the traffic is further discussed. An upper bound for the time between the arrival of a packet and the arrival of the next packet is estimated. Based upon the estimation, the channel scheduling and DTX/DRX at the UTRAN are analyzed, and the decision of when to connect at the UE is made. The analysis is made in terms of the resources used within the UTRAN and the observed battery consumption of the terminals.

EP 2061192 A1 discusses a method and an apparatus for transitioning states or modes on a user equipment. The method includes the step of receiving, at a network element, a transition indication. The method further includes the step of checking a radio resource profile for the user equipment. Furthermore, the method includes the step of making a transitioning decision at the network element based on the received transition indication and the radio resource profile.

### SUMMARY

In one of its aspects the technology disclosed herein concerns a method of operating a node of a radio access network as defined by independent claim 1.

In another of its aspects the technology disclosed herein concerns a node of a radio access network as defined by independent claim 7.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 is a diagrammatic view showing radio resource control states.
Fig. 2 is a diagrammatic view depicting, e.g., a burst, maximum inter-arrival time (IATmax) between packets of a burst, and idle time between bursts (ITB).
Fig. 3 is a diagrammatic view depicting conventional timer operation relative to the sending and receiving IP packets.
Fig. 4 is a simplified schematic view of an example communications network comprising a radio network controller node having an accuracy predictive switching radio resource manager.
Fig. 5 is a flowchart depicting example acts or steps involved in a method of operating a node of a radio access network which controls transitions between radio resource control states for a wireless terminal.
Fig. 6 is a flowchart depicting example acts or steps involved in a method of operating a node of a radio access network.
Fig. 7 is a flowchart depicting example acts or steps involved in a method of operating a node for making a radio resource control state switch including a generic approach to refining a prediction of a data transmission parameter
Fig. 7A and Fig. 7B are flowcharts depicting example acts or steps involved in special cases of the method of Fig. 7.
Fig. 8 is a flowchart depicting example acts or steps involved in another embodiment and mode of a method of operating a node of a radio access network.
Fig. 9 is a flowchart depicting example acts or steps involved in yet another embodiment and mode of a method of operating a node of a radio access network.
Fig. 10 is a schematic view showing more details of a non-limiting, example implementation of the radio network controller node of Fig. 4.
Fig. 11 is a schematic view showing that various elements of the radio network node of Fig. 10 or other embodiments may be provided on a machine platform.
Fig. 12 and Fig. 13 and are graphs showing prediction accuracy when a prediction is made at two respective differing times.

### DETAILED DESCRIPTION

In the following description, for purposes of explanation and not limitation, specific details are set forth such as particular architectures, interfaces, techniques, etc. in order to provide a thorough understanding of the present disclosure. However, it will be apparent to those skilled in the art that the present disclosure may be practiced in other embodiments that depart from these specific details. In some instances, detailed descriptions of well-known devices, circuits, and methods are omitted so as not to obscure the description of the present embodiments with unnecessary detail.

Thus, for example, it will be appreciated by those skilled in the art that block diagrams herein may represent conceptual views of illustrative circuitry or other functional units embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

The functions of the various elements including functional blocks, including but not limited to those labeled or described as "computer", "processor" or "controller", may be provided through the use of hardware such as circuit hardware and/or hardware capable of executing software in the form of coded instructions stored on computer readable medium. Thus, such functions and illustrated functional blocks are to be understood as being hardware-implemented and/or computer-implemented, and thus machine-implemented.

In terms of hardware implementation, the functional blocks may include or encompass, without limitation, digital signal processor (DSP) hardware, reduced instruction set processor, hardware, e.g., digital or analog, circuitry including but not limited to application specific integrated circuit(s) (ASIC), and, where appropriate, state machines capable of performing such functions.

In terms of computer implementation, a computer is generally understood to comprise one or more processors or one or more controllers, and the terms computer and processor and controller may be employed interchangeably herein. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" shall also be construed to refer to other hardware capable of performing such functions and/or executing software, such as the example hardware recited above.

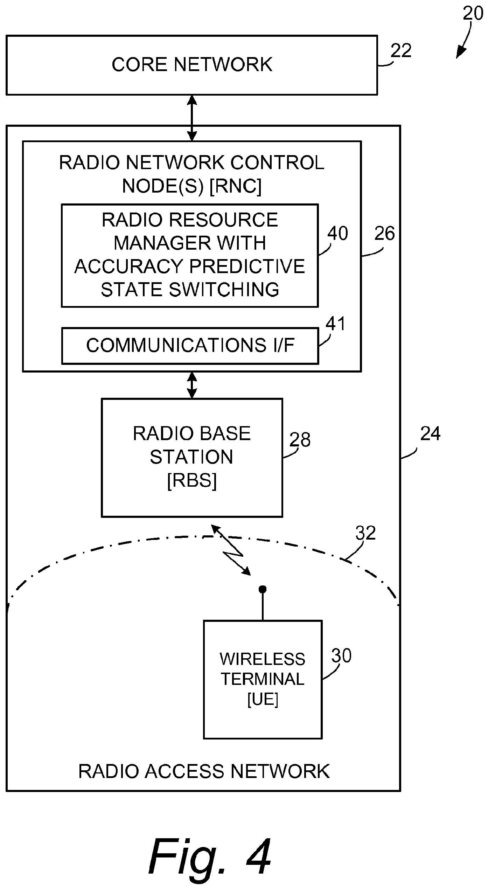

Fig. 4 illustrates an example communications network 20 which comprises core network 22 and radio access network 24. As understood from the foregoing, in an example embodiment radio access network 24 comprises one or more radio network controller nodes (RNC) 26 and one or more radio base station nodes (BS) 28. A wireless terminal 30 communicates with the radio base station node 28 over a radio or air interface 32.

The wireless terminal may be called by other names and comprise different types of equipment. For example, the wireless terminal may also be called a mobile station, wireless station, or user equipment unit (UE), and may be equipment such as a mobile telephone ("cellular" telephone) and a laptop with mobile termination, and thus may be, for example, portable, pocket, hand-held, computer-included, or car-mounted mobile devices which communicate voice and/or data with radio access network.

As further shown in Fig. 4, radio network controller node 26 comprises radio resource manager 40, which is generic to essentially all embodiments described herein. The radio resource manager 40 of the technology disclosed provides dynamic UE/RRC state switching, and is also known as accuracy predictive switching radio resource manager 40. The node 26 also comprises a communications interface 41 through which the node communicates, ultimately with the wireless terminal.

In one of its aspects the technology disclosed herein increases the probability of making correct radio resource control state switch decisions. The technology disclosed herein outlines strategies which not only make a prediction whether or not to make a state switch, but also take into account the accuracy of the prediction to enhance the performance of the switching decision and hence minimize the RNC load. Since the gains with respect to RNC load are largest the longer the wireless terminal stays in a lower state, the prediction should be done as soon as possible after the data activity or data burst ends.

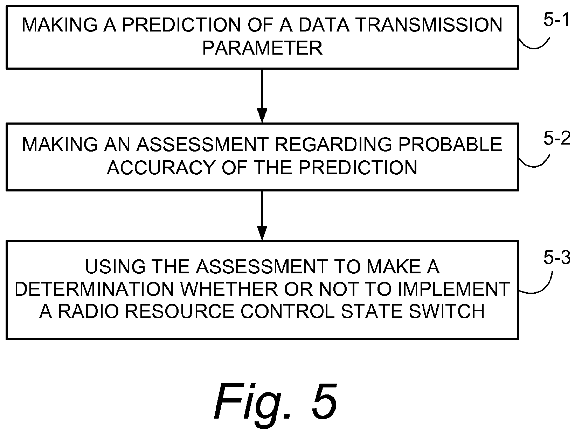

Fig. 5 shows example acts or steps involved in a method of operating a node of a radio access network, such as radio network controller node 26, and which controls transitions between radio resource control states for a wireless terminal. As illustrated in Fig. 5, act 5-1 comprises, upon completion of a data activity, making a prediction of a data transmission parameter. Act 5-2 comprises making an assessment regarding probable accuracy of the prediction. Act 5-3 comprises using the assessment to make a determination whether or not to implement a radio resource control state switch (the "state switch"). If a state switch is implemented, such implementation is communicated by the node 26 to the wireless terminal through communications interface 41.

An aspect of the technology disclosed herein is prediction of the data transmission parameter. As explained herein, the technology disclosed herein encompasses different and several types of data transmission parameters, for which the example acts of the method of Fig. 5 and other modes hereof apply essentially uniformly. For sake of illustration one particular data transmission parameter is used herein as a representative example: inter-arrival time (IAT). Thus, it should be understood that other variables could be targeted for prediction with the same purpose, e.g. burst size, which depending on the RNC load model could be of importance for channel switching decisions.

Considering now the acts of Fig. 5 in more detail and with reference to the representative, example data transmission parameter of inter-arrival time (IAT), act 5-1 depicts that, essentially immediately after a data activity has ended, a prediction of the inter-arrival time (IAT) to the next burst is made. In an example implementation, this prediction of the data transmission parameter (of whatever type) may be of the form of the probability that the data transmission parameter exceeds a predetermined value. For example, with reference to inter-arrival time (IAT), the prediction may be of the form that the probability that the time to next burst is more than a specified value *t*. In an example implementation using the inter-arrival time (IAT) as the data transmission parameter, execution of act 5-1 may result in an output of either *L_{pred}*, or *S_{pred}*. *L_{pred}* and *S_{pred}* indicate that the next IAT is predicted to be longer or shorter, respectively, than the specified value *t*.

As mentioned above, act 5-2 comprises making an assessment regarding probable accuracy of the prediction. In other words, an assessment of the probability regarding the prediction of act 5-1, e.g., whether the prediction is correct or wrong. If the prediction of act 5-1 indicates a long IAT (implying that a down-switch should be made) but the assessment of act 5-2 determines that the accuracy of the prediction is insufficient, then no down-switch decision is taken at this point.

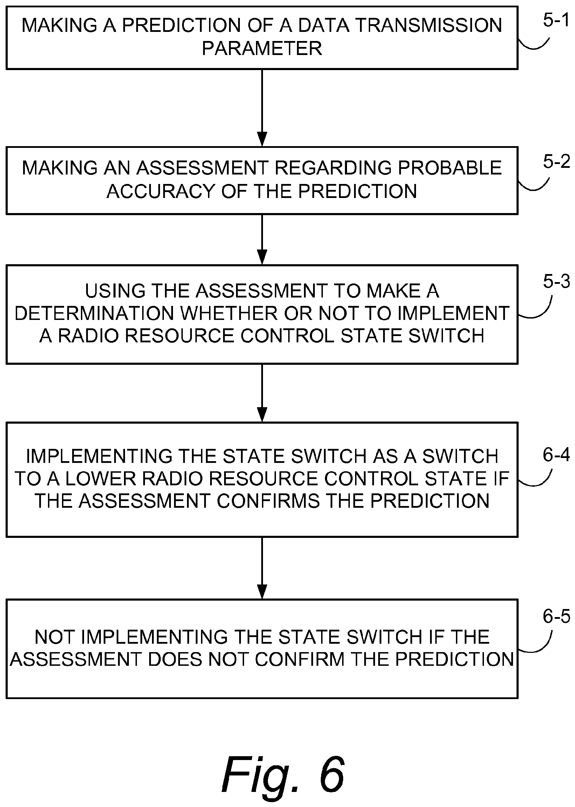

The effect of the prediction accuracy determination of act 5-3 is further illustrated, in an example embodiment and mode, by Fig. 6. Fig. 6 specifically shows that, as a result of execution of the prediction accuracy determination of act 5-3, as act 6-4 the radio resource manager 40 implements the radio resource control state switch if the accuracy assessment confirms the prediction. On the other hand, as act 6-5 the radio resource manager 40 does not implement the radio resource control state switch if the accuracy assessment does not confirm the prediction.

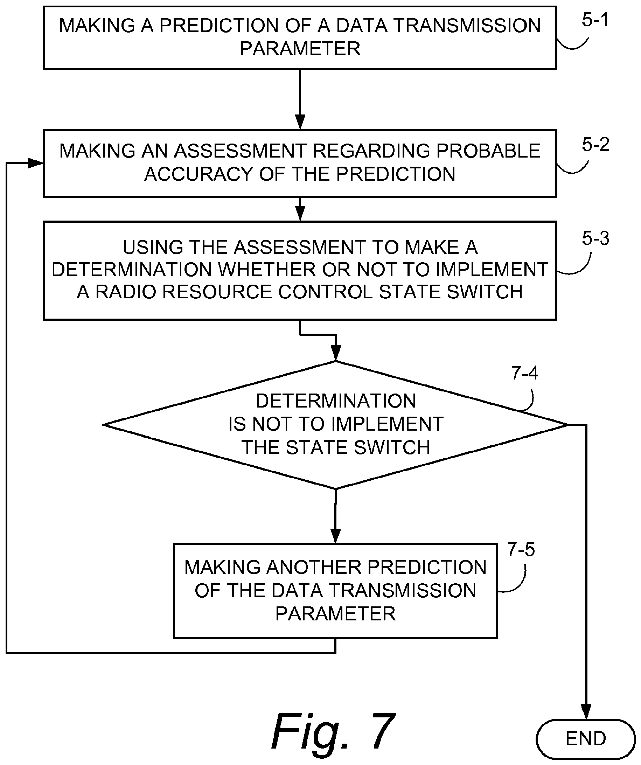

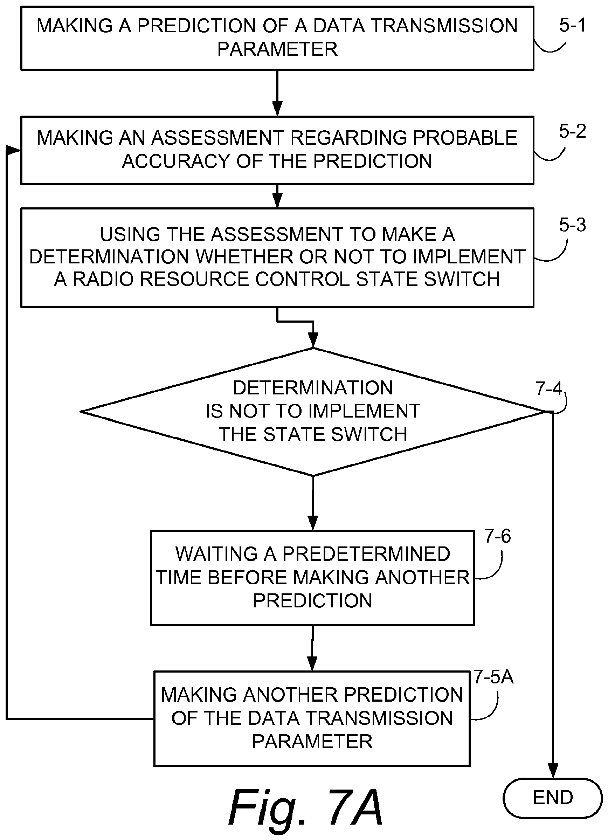

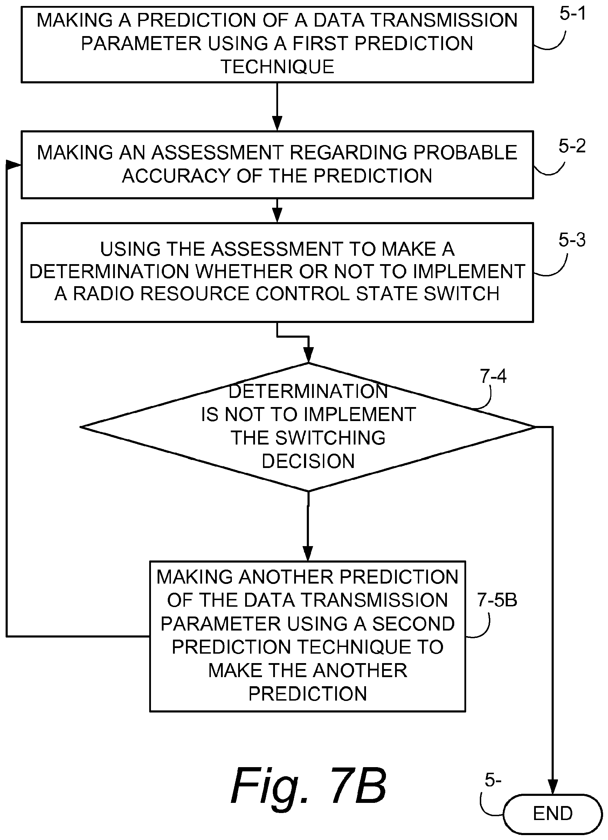

Fig. 7 illustrates another example embodiment and mode wherein, if the determination is not to implement the state switch, the method further comprises making another prediction of the data transmission parameter and then performing the acts of the basic mode, e.g., acts (2) - (3), with respect to the another prediction. In addition to other acts such as acts 5-1 through 5-3 of Fig. 5, Fig. 7 includes an act 7-4 of checking whether the determination of act 5-3 is to not implement the state switch. If the check of act 7-4 indicates that the state switch was not implemented, as act 7-5 the radio resource manager 40 makes another prediction of the data transmission parameter. Then, the radio resource manager 40 repeats at least acts 5-2 through 5-3 using the prediction of act 7-5, e.g., the "another" or "new" prediction, as the prediction for acts 5-2 through 5-3. In so doing, as act 5-2 the radio resource manager 40 makes an assessment of the probable accuracy of the new prediction developed at act 7-5, and then as act 5-3 uses the assessment to make the determination whether or not to implement the radio resource control state switch. After the assessment of act 5-3 the radio resource manager 40 then again executes act 7-4 to ascertain whether the state switch was implement and, if not, makes yet another prediction when again executing act 7-5. Thus, the loop of acts 5-2, 5-3, 7-4, and 7-5 may be re-executed repeatedly as needed or deemed appropriate for developing an acceptable and/or usable prediction.

The embodiment and mode of Fig. 7 represents a generic approach to refining the prediction of the data transmission parameter in order to make a radio resource control state switch. Fig. 7A and Fig. 7B illustrate two embodiments and modes which may be special cases of the generic approach of Fig. 7.

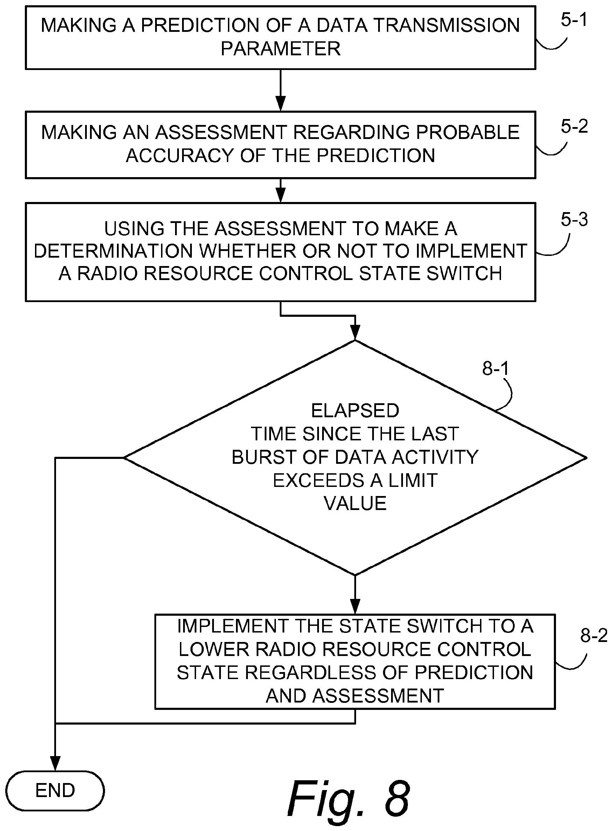

In the embodiment and mode of Fig. 7A, if the check of act 7-4 indicates that the state switch was not implemented, as act 7-6 the radio resource manager 40 waits a predetermined time before making another prediction of the data transmission parameter. Then, after the predetermined wait time of act 7-6 has elapsed, as act 7-5A the radio resource manager 40 makes another prediction of the data transmission parameter. Typically, but not necessarily, the another prediction of act 7-5A may be made using a similar technique as was initially employed for act 5-1. Thereafter acts 5-2 through 5-3 are executed in loop like fashion as understood from the foregoing discussion of Fig. 7. Thus, as illustrated by Fig. 7A, in at least some embodiments and modes if no down-switch decision is taken, a new prediction is made after a given time, sometimes referred to as "*delta*" including an assessment of the accuracy of the prediction, and the process is repeated. In this fashion, the process is repeated until a sufficient accuracy of the prediction is obtained, or (as explained and understood, e.g., with reference to Fig. 8) until a sufficiently long time has passed since the last data activity.

A first prediction technique is used to make the prediction of act 5-1. Examples of prediction techniques are described elsewhere herein and additionally are known to the person skilled in the art. In the embodiment and mode of Fig. 7B, if the check of act 7-4 indicates that the state switch was not implemented, as act 7-5B the radio resource manager 40 uses a second prediction technique to make the another prediction. The second prediction technique is different from, and usually more sophisticated or more exacting than the first prediction technique. Thereafter act 5-2 through act 5-3 are executed in loop like fashion as understood from the foregoing discussion of Fig. 7.

Fig. 8 illustrates another example embodiment and mode which also includes acts such as act 5-1 and act 5-3 as previously described. In addition, the embodiment and mode of Fig. 8 comprises act 8-1 and act 8-2. Act 8-1 comprises the radio resource manager 40 determining or otherwise ascertaining if the elapsed time since the last burst of data activity exceeds a limit value. If the determination of act 8-1 is positive, act 8-2 is performed. Act 8-2 comprises implementing the state switch to a lower radio resource control state regardless of the prediction of act 5-1 and the assessment of act 5-2. Thus, in the embodiment of Fig. 8, the radio resource manager 40 implements the state switch to a lower radio resource control state regardless of the prediction and the assessment if the elapsed time since the last burst of data activity exceeds a limit value.

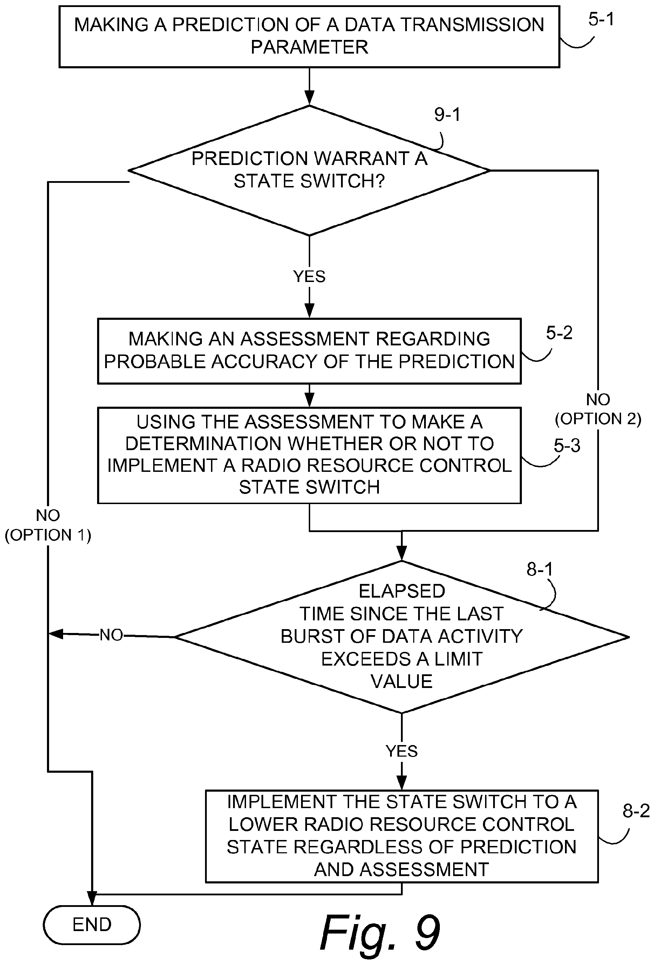

Fig. 9 illustrates an embodiment and mode which addresses what may happen if the prediction of the data transmission parameter as performed at act 5-1 indicates to the radio resource manager 40 that a state switch should not be made. In this regard, act 9-1 shows the radio resource manager 40 checking whether the prediction as made by act 5-1 warrants a state switch. It may be, for example, that even before the assessment of at 5-2 the prediction is of such small magnitude or value as to seemingly already rule out the state switch. In such case, the radio resource manager 40 has several options as reflected by Fig. 9. One such option (option 1) is to avoid act 5-2 and act 5-3 and thereby essentially exit the routine of Fig. 9 with respect to the completed data activity, and then re-enter the routine upon completion of the next data activity. Another option (option 2) is for the radio resource manager 40 to check whether the elapsed time since the completed data activity exceeds a limit value, in the manner of act 8-1 of Fig. 8. If the determination of act 8-1 is positive, act 8-2 is performed. Act 8-2 comprises implementing the state switch to a lower radio resource control state regardless of the prediction of act 5-1. It should be understood that the check of act 9-1 (regarding whether the prediction warrants a state switch or not) and the resultant two options are also usable or combineable with other embodiments, whether or not specifically shown or stated herein.

As described above, as act 5-1 the radio resource manager 40 makes a prediction of a data transmission parameter upon completion of a data activity.

To make the prediction of act 5-1 the radio resource manager 40 may use one or more of a variety of prediction techniques or algorithms. In one example embodiment the radio resource manager 40 may employ a Cumulative Distribution Function (CDF) as a predictor. For example, a Cumulative Distribution Function (CDF) may be used as a predictor in an implementation in which inter-arrival time (IAT) is the data transmission parameter.

In general terms, a Cumulative Distribution Function (CDF) of a quantity such as burst inter-arrival time (e.g., CDF(IAT)) may give an assessment of the prediction accuracy, since it gives the probability that IAT<=x. From this, the probability that IAT is greater than x, e.g., P(IAT >x), may be derived as P(IAT>x) = 1 - P(IAT<=x). So if a prediction may be made that the next IAT is >x, the probability of an erroneous prediction is the CDF at x (e.g., PIAT<=x). From the CDF, it is also possible to derive the corresponding probabilities of erroneous predictions if the prediction is made at a later time t_delta (e.g., predicting after waiting t_delta).

While use of a Cumulative Distribution Function (CDF) may be computationally efficient in some example embodiments, in other embodiments more accurate predictions may be obtained with techniques such as discriminant analysis or decision tree algorithms. The input information applied to the the predictors may include data such as inter-arrival time (IAT), data burst sizes, and UL/DL direction of data, for example. Other input information which may be applied to the predictors may comprise device type, application, etc.

In general, the precision of the prediction performed as act 5-1 may depend on several factors, e.g. prediction method, traffic type, specific user, number of samples used to obtain the predictor, etc.

It was mentioned above that, in an example embodiment and implementation in which the data transmission parameter is inter-arrival time (IAT), the outcome of the prediction of act 5-1 may be either *L_{pred}* or *S_{pred}*, which respectively indicate that the next IAT is predicted to be longer or shorter than a specified value or predetermined value t. As understood from the foregoing, if the outcome of the prediction of act 5-1 is *S_{pred}*, there may be no down-switch (see, for example, act 9-1 of Fig. 9). But if the outcome of the prediction of act 5-1 is *L_{pred}* (e.g., the next IAT is predicted to be longer than *t*), the assessment of act 5-2 is performed.

The assessment of act 5-2 may be performed in various ways. One example way of performing the assessment of act 5-2 is to make an estimation of the probability that the next IAT is really long, given that it is predicted to be long, i.e. *P(IAT* > *t* | *L_{pred})*. If this value is greater than a probability threshold *Aₗᵢₘ*, the prediction may be trusted and a down-switch decision may be made. Thus, in the present invention the assessment act 5-2 comprises determining that the probable accuracy of the prediction exceeds an accuracy threshold, e.g., *A_{lim.}*

The value of the accuracy limit, *Alim*, is chosen in relation to the cost of doing an erroneous decision and also weighted with respect to the cost of not taking a decision, e.g., waiting until next decision occasion. The cost may be, for example, load of nodes for different decisions, and also the current load or cost situation of the system or particular system nodes. In terms of cost of decision, for sake of generality for a first case suppose that the cost for downswitching when the prediction is correct is "1.0", while the cost of downswitching when the prediction is erroneous is "10.0". In this first case one needs a high accuracy of the prediction to do a downsearch, since the cost is very high if the prediction is incorrect. On the other hand, in another (second) case suppose that the cost of an erroneous downswitch is only "1.5". In this second case one does not need such a high accuracy of the prediction to do a downswitch, since not much is lost in terms of cost if the prediction is wrong. It may be in some cases that *P(IAT* > *t* | *L_{pred})* is rather low, e.g., less than *Aₗᵢₘ*, and therefore the assessment of act 5-2 indicates that the prediction of act 5-1 is not to be trusted. In this case a new, more accurate prediction may be needed.

As described above, Fig. 7 shows generic methods and techniques for obtaining another (e.g., a "new") prediction in case the assessment of act 5-2 does not lead to a state switch. As understood from the subcase of Fig. 7A above and act 7-6, the new prediction may be obtained by waiting a predetermined time period (e.g., *t_{delta}*) before obtaining a new prediction (act 7-5A, which may be performed using sing the same or another prediction technique. As understood from the subcase of Fig. 7B above and act 7-5B, the new prediction may also be obtained using a more sophisticated prediction technique (typically more computationally demanding). In either the case of Fig. 7A or Fig. 7B, if the outcome of this second prediction is *L_{pred}*, the accuracy of this second prediction is also assessed at act 5-2. This process is repeated until the accuracy of the prediction is higher than *Aₗᵢₘ* or until a sufficient time has passed since the last data activity, i.e. time since first prediction is higher than *t_{lim_delta}*.

The predictions and the assessment of the prediction accuracy may be made in different ways depending in the actual prediction technique or algorithm used. In an example embodiment and implementation, a tree classifier is used which may operate based on a trace of the users traffic. An example of a tree classifier is a C4.5 classifier. A C4.5 classifier builds decision trees from a set of training data using a concept of information entropy. The training data input into the C4.5 classifier is a set S = s1,s2,... of already classified samples. Each sample si = x1,x2,... is a vector where x1,x2,... represent attributes or features of the sample. The training data is augmented with a vector C = c1,c2,... where c1,c2,... represent the class to which each sample belongs. At each node of the tree, the C4.5 classifier chooses one attribute of the data that most effectively splits its set of samples into subsets enriched in one class or the other. Its criterion is the normalized information gain (difference in entropy) that results from choosing an attribute for splitting the data. The attribute with the highest normalized information gain is chosen to make the decision. The C4.5 algorithm then recurses on the smaller sublists.

As mentioned above, in an example implementation the C.45 tree classifer may operate on a trace of user traffic. Several input variables derived from the trace may be used such as burst size, uplink (UL) or downlink (DL) direction, previous IAT, average burst size in the trace, etc. The classifier is trained on historical traces, either a sample from the network or more fine grained based on application, device types, or users, etc. The training of the classifer may result in a classifier tree which is used to predict new IATs. When a new IAT is predicted, this is done by using the input variables corresponding to the IAT and this will place the prediction in an endpoint of the tree (a leaf). The distribution of IATs in the training set that also where placed in this leaf is an assessment of the prediction accuracy of the IAT that is predicted.

As an example of operation of the a C4.5 classifer according to the foregoing, in a certain leaf the distribution between long and short in the training data may be, e.g., 0.75/0.25 indicating an accuracy of 75%. In another leaf the distribution may be e.g. 0.6/0.4, indicating an accuracy of 60%. If the fraction of long IATs in the training data is lower than 50%, the IAT is predicted to be short. Training on different data will result in different trees so that the tree resulting on training on data with different a *t_{delta}* will give different trees with possibly different classifications and different accuracies.

For users for whom the prediction accuracies are good the switching decision may be taken almost immediately after the end of a data activity. For other users a new prediction is made after a time delta (*t_{delta}*) followed by a new decision, as understood with respect to Fig. 7 and its cases of Fig. 7A and Fig. 7B. This is repeated as in the example above until either a down-switch decision is taken or the time since the first prediction is higher than *t_{lim_delta}* (*t_{delta}*<<*t_{lim_delta}*).

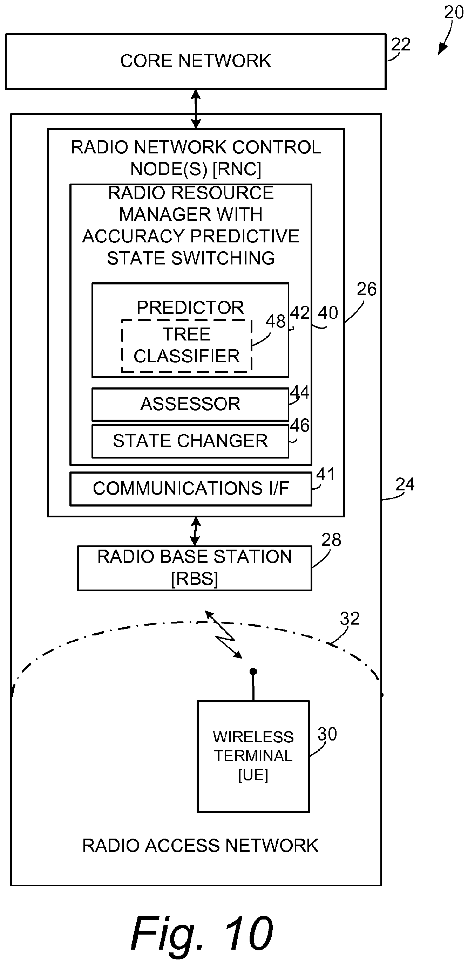

Fig. 10 resembles Fig. 4 but shows more example details of an example embodiment and implementation of radio resource manager 40. In particular, Fig. 10 shows radio resource manager 40 as comprising predictor 42 (which implements act 5-1); prediction assessor 44 (which implements act 5-2); and state changer 46 (which implements act 5-3). Since a tree classifer is one example a prediction technique, Fig. 10 further depicts by broken lines that tree classifer 48 may comprise the predictor 42.

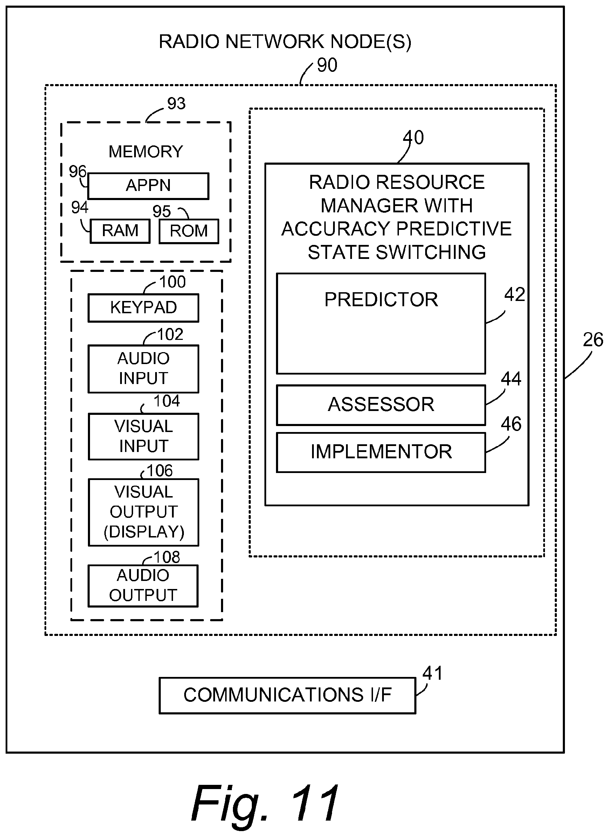

Fig. 11 illustrates more structural detail for a radio network node 26 which may be applicable to implementations of any of the foregoing embodiments or other embodiments encompassed hereby. For example Fig. 11 illustrates that various elements of radio network node 26 may be provided on a machine platform 90. The terminology "platform" is a way of describing how the functional units of radio network node 26 may be implemented or realized by machine. The machine platform 90 may take any of several forms, such as (for example) a computer implementation platform or a hardware circuit platform. Fig. 11 particularly shows machine platform 90 as being a computer platform wherein logic and functionalities of radio network node 26 including but not limited to radio resource manager 40 are implemented by one or more computer processors or controllers as those terms are herein expansively defined. The radio resource manager 40 of Fig. 11 may represent radio resource managers any of the foregoing embodiments.

In such a computer implementation the radio network node 26 may comprise, in addition to a processor(s), memory section 93 (which in turn may comprise random access memory 94; read only memory 95; application memory 96 (a non-transitory computer readable medium which stores, e.g., coded non instructions which may be executed by the processor to perform acts described herein); and any other memory such as cache memory, for example). The platform 90 may also comprise certain input/output units or functionalities, the representative input/output units for being illustrated in Fig. 11 being keypad 100; audio input device (e.g. microphone) 102; visual input device (e.g., camera) 104; visual output device (e.g., display 106); and audio output device (e.g., speaker) 108.

The technology disclosed herein also encompasses a computer program product which is used to configure the radio resource manager 40. The computer program product comprises coded instructions stored on non-transient medium, such as a disk, CD, or other memory device. When executed on a processor such as that of the aforementioned platform comprising the radio resource manager 40, the computer program product executes acts such as those described in conjunction with the preceding embodiments, including but not limited to the act 5-1, 5-2, and 5-3, for example. In addition, the instructions of the computer program product may be configured or arranged to accomplish any of the other acts, modes, or implementations described herein.

In the example of Fig. 11 the platform 90 has been illustrated as computer-implemented or computer-based platforms. Another example platform suitable for radio network node 26 is that of a hardware circuit, e.g., an application specific integrated circuit (ASIC) wherein circuit elements are structured and operated to perform the various acts described herein.

It will be appreciated that the example embodiments of radio network nodes herein described or encompassed, including but not limited to those of Fig. 4, Fig. 10, and Fig. 11 may and typically do comprise other units or functionalities known to the person skilled in the art. For example, radio network controller nodes typically include handover functionality and diversity functionality, e.g., combining and splitting capabilities.

The technology disclosed in any of the embodiments described herein or encompassed hereby is general and applicable to any mobile telecommunications standard employing transitions between states like UE/RRC states.

There are several reasons for success of the technology disclosed herein, one reason being that there are large differences between hit rates of the predictions for different users or cases. Hence, users or cases which may be predicted accurately may be down-switched quickly, while at the same time, the risk of erroneously downswitching other users is minimized.

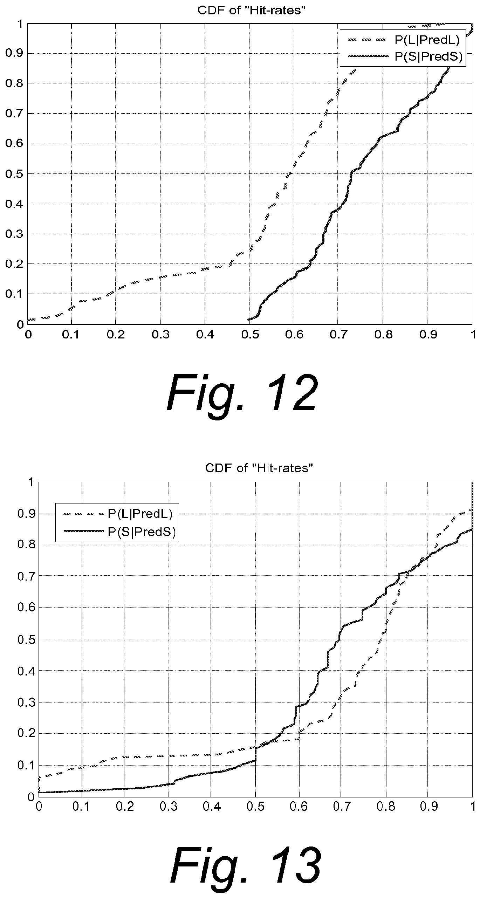

The increase accuracy of this algorithm is illustrated with the help of Fig. 12 and Fig. 13. Fig. 12 illustrates the cumulative distribution function of P(IAT>Lₗᵢₘ |L_{pred}) and P(IAT<Lₗᵢₘ |S_{pred}) for various users. That is, Fig. 12 illustrates a hit rate when the prediction is made immediately at the end of a data burst transmission, *Lₗᵢₘ* = 2. The broken line in Fig. 12 shows the cumulative distribution function (CDF) of the prediction accuracy in a situation in which the prediction has given that the IAT is longer than 2 seconds. Correspondingly the solid line in Fig. 12 shows the CDF of the prediction accuracy in the case that the prediction has given that the IAT is shorter than 2 seconds.

Fig. 13 illustrates the cumulative distribution function of P(IAT>Lₗᵢₘ |L_{pred}) and P(IAT<Lₗᵢₘ |S_{pred}) for various users when t_{delta} = 2. That is, Fig. 13 depicts the accuracy of the predictions for different users at t_{delta} = 2. Hence, the prediction is made after 2 seconds after the end of a data burst whether next burst will be after or before another 2 seconds.

Compared to the result of Fig. 12, the prediction accuracy is 80% and 70% at the 50-percentile compared to 60% and 73% in Fig. 13.

Logic for implementing an example embodiment and mode of the technology disclosed herein is provided below. In the logic notation the variable L which is the time without data activity for which it is optimal from an RNC load perspective to down-switch to a lower state.
1 Immediately after data activity (burst) set *delta* = *0*
   *1.1* Predict if next IAT is larger than *L*
   1.2 If prediction in 1.1 is yes
      1.2.1 If the accuracy or hit rate for this prediction is > *Aₗᵢₘ* then down-switch decision is taken
      1.2.1 Otherwise no down-switch decision and wait *t_{delta}* and go to 1.1. Note: if time since last data activity is > *t_{lim_delta}* then down-switch
   1.3 If prediction in 1.1 is no
      1.3.1 no down-switch decision and wait *t_{delta}* and go to 1.1. Note: if time since last data activity is > *t_{lim_delta}* then down-switch

The technology disclosed herein increases the precision in channel switching decisions in adaptive channel switching by taking into account the accuracy of the predictions of the length until the next data activity will take place. Taking the accuracy of the prediction into account may increase the gains from adaptive channel switching in terms of RNC load which may otherwise suffer from an increased rate of non optimal channel down-switches.

The technology disclosed herein may make it possible to more fully take advantage of adaptive channel switching and also to combine this approach with present timer based solutions.

Although the description above contains many specificities, these should not be construed as limiting the scope of the technology disclosed herein but as merely providing illustrations of some of the presently preferred embodiments of the disclosed technology. Therefore, it will be appreciated that the scope of the technology disclosed herein fully encompasses other embodiments which may become obvious to those skilled in the art, and that the scope of the technology disclosed herein is accordingly to be unduly limited. Reference to an element in the singular is not intended to mean "one and only one" unless explicitly so stated, but rather "one or more." All structural, chemical, and functional equivalents to the elements of the above-described preferred embodiment that are known to those of ordinary skill in the art are expressly encompassed hereby. Moreover, it is not necessary for a device or method to address each and every problem sought to be solved by the technology disclosed herein for it to be encompassed hereby.

## Claims

1. A method of operating a node (26) of a radio access network (24) which controls transitions between radio resource control states for a wireless terminal (30), the method comprising:
1) upon completion of a data activity, making (5-1) a prediction of a data transmission parameter, wherein the method further comprises:
2) making (5-2) an assessment regarding probable accuracy of the prediction, wherein making the assessment comprises determining that the probable accuracy of the prediction exceeds an accuracy threshold,
wherein the accuracy threshold is selected based on a weighted cost of erroneously making a decision to switch the radio resource control state, and a weighted cost of erroneously making a decision not to switch the radio resource control state; and
3) using (5-3) the assessment to make a determination whether or not to implement a radio resource control state switch.

2. The method of claim 1, wherein the data transmission parameter comprises at least one of:
an inter-arrival time between bursts of data activity; and
a burst size of a burst of data activity.

3. The method of claim 2, wherein the data transmission parameter comprises the inter-arrival time between bursts of data activity, the method further comprising:
implementing (8-2) the state switch to a lower radio resource control state regardless of the prediction and the assessment if an elapsed time since a last burst of data activity exceeds a limit value.

4. The method of claim 1, wherein if the determination (7-4) is not to implement the state switch, the method further comprises making (7-5) another prediction of the data transmission parameter and then performing 2)-3) with respect to the another prediction.

5. The method of claim 1, wherein, if the prediction indicates that the data transmission parameter exceeds a first predetermined value, the method further comprises:
implementing (6-4) the state switch as a switch to a lower radio resource control state if the assessment confirms the prediction; and
not implementing (6-5) the state switch if the assessment does not confirm the prediction.

6. The method of claim 1, wherein the prediction is expressed as a probability that the parameter has a predetermined value.

7. A node of a radio access network (24) which controls transitions between radio resource control states for a wireless terminal (30), the node (26) comprising:
a radio resource manager (40) configured to:
1) make a prediction of a data transmission parameter upon completion of a data activity;
2) make an assessment regarding probable accuracy of the prediction by determining that the probable accuracy of the prediction exceeds an accuracy threshold, wherein the accuracy threshold is selected based on a weighted cost of erroneously making a decision to switch the radio resource control state, and a weighted cost of erroneously making a decision not to switch the radio resource control state;
3) use the assessment to make a determination whether or not to implement a radio resource control state switch; and
a communications interface (41) through which the node (26) notifies the wireless terminal (30) whether or not to implement the state switch.

8. The node of claim 7, wherein the data transmission parameter comprises at least one of:
an inter-arrival time between bursts of data activity; and
a burst size of a burst of data activity.

9. The node of claim 8, wherein the data transmission parameter comprises the inter-arrival time between bursts of data activity, and
wherein the radio resource manager (40) is configured to implement the state switch to a lower radio resource control state regardless of the prediction and the assessment if an elapsed time since a last burst of data activity exceeds a limit value.

10. The node of claim 7, wherein if the determination is not to implement the state switch, the radio resource manager (40) is configured to make another prediction of the data transmission parameter and then to perform 2)-3) with respect to the another prediction.

11. The node of claim 7, wherein, if the prediction indicates that the data transmission parameter exceeds a first predetermined value, the radio resource manager (40) is further configured:
to implement the state switch as a switch to a lower radio resource control state if the assessment confirms the prediction; and
not to implement the switching decision if the assessment does not confirm the prediction.

12. The node of claim 7, wherein the radio resource manager (40) is configured to express the prediction as a probability that the parameter has a predetermined value.

13. The node of claim 7, wherein the data transmission parameter is the inter-arrival time between bursts of data activity, and wherein the radio resource manager (40) is configured to express the prediction as a probability that the inter-arrival time between bursts of data activity is greater than a predetermined time value.

## Patentansprüche

1. Verfahren zum Betrieb eines Knotens (26) eines Funkzugangsnetzes (24), das Übergänge zwischen Funkressourcen-Steuerzuständen für ein drahtloses Endgerät (30) steuert, wobei das Verfahren Folgendes umfasst:
1) nach Beendigung einer Datenaktivität, eine Vorhersage über einen Datenübergangsparameter treffen (5-1), wobei das Verfahren außerdem umfasst:
2) eine Abschätzung hinsichtlich der wahrscheinlichen Genauigkeit der Vorhersage ermitteln (5-2), wobei das Ermitteln der Abschätzung umfasst, dass die wahrscheinliche Genauigkeit der Vorhersage eine Genauigkeitsschwelle übersteigt, wobei die Genauigkeitsschwelle ausgewählt wird, auf gewichteten Kosten einer fehlerhaft getroffenen Entscheidung basierend, den Funkressourcen-Steuerzustand zu ändern, und gewichteten Kosten einer fehlerhaft getroffenen Entscheidung basierend, den Funkressourcen-Steuerzustand nicht zu ändern; und
3) Verwenden (5-3) der Abschätzung, um eine Bestimmung zu treffen, ob eine Funkressourcen-Steuerzustandsänderung zu implementieren ist oder nicht.

2. Verfahren nach Anspruch 1, wobei der Datenübertagungsparameter mindestens eins von Folgenden umfasst:
eine Zwischenankunftszeit zwischen Bursts von Datenaktivität; und
eine Burst-Größe eines Bursts von Datenaktivität.

3. Verfahren nach Anspruch 2, wobei der Datenübertragungsparameter die Zwischenankunftszeit zwischen Bursts von Datenaktivität umfasst, wobei das Verfahren außerdem umfasst:
Implementieren (8-2) der Zustandsänderung in einen niedrigeren Funkressourcen-Steuerzustand, ungeachtet der Vorhersage und der Abschätzung, falls eine abgelaufene Zeit seit einem letzten Burst von Daten-Aktivitäten einen Grenzwert übersteigt.

4. Verfahren nach Anspruch 1, wobei, falls die Bestimmung (7-4) darin besteht, die Zustandsänderung nicht zu implementieren, das Verfahren außerdem umfasst, eine andere Vorhersage des Datenübertragungsparameters zu treffen (7-5) und dann 2) - 3) bezüglich der anderen Vorhersage auszuführen.

5. Verfahren nach Anspruch 1, wobei, falls die Vorhersage anzeigt, dass der Datenübertragungsparameter einen ersten vorgegebenen Wert übersteigt, das Verfahren außerdem Folgendes umfasst:
Implementieren (6-4) der Zustandsänderung als eine Änderung in einen niedrigeren Funkressourcen-Steuerzustand, falls die Abschätzung die Vorhersage bestätigt; und
Nichtimplementieren (6-5) der Zustandsänderung, falls die Abschätzung die Vorhersage nicht bestätigt.

6. Verfahren nach Anspruch 1, wobei die Vorhersage als eine Wahrscheinlichkeit ausgedrückt wird, dass der Parameter einen vorgegebenen Wert hat.

7. Knoten eines Funkzugangsnetzes (24), das Übergänge zwischen Funkressourcen-Steuerzuständen für ein drahtloses Endgerät (30) steuert, wobei der Knoten (26) Folgendes umfasst:
einen Funkressourcenmanager (40), konfiguriert zum:
1) Treffen einer Vorhersage eines Datenübertragungsparameters nach Beendigung einer Datenaktivität;
2) Ermitteln einer Abschätzung hinsichtlich wahrscheinlicher Genauigkeit der Vorhersage durch Bestimmen, dass die wahrscheinliche Genauigkeit der Vorhersage eine Genauigkeitsschwelle übersteigt, wobei die Genauigkeitsschwelle ausgewählt wird, auf gewichteten Kosten einer fehlerhaft getroffenen Entscheidung basierend, den Funkressourcen-Steuerzustand zu ändern, und gewichteten Kosten einer fehlerhaft getroffenen Entscheidung basierend, den Funkressourcen-Steuerzustand nicht zu ändern;
3) Verwenden der Abschätzung, um eine Bestimmung zu treffen, ob eine Funkressourcen-Steuerzustandsänderung zu implementieren ist oder nicht; und
eine Kommunikations-Schnittstelle (41), über die der Knoten (26) dem drahtlosen Endgerät (30) meldet, ob die Zustandsänderung zu implementieren ist oder nicht.

8. Knoten nach Anspruch 7, wobei der Datenübertragungsparameter mindestens eins von Folgenden umfasst:
eine Zwischenankunftszeit zwischen Bursts von Datenaktivität; und
eine Burst-Größe eines Bursts von Datenaktivität.

9. Knoten nach Anspruch 8, wobei der Datenübertragungsparameter die Zwischenankunftszeit zwischen Bursts von Datenaktivität umfasst, und
wobei der Funkressourcenmanager (40) dazu konfiguriert ist, die Zustandsänderung in einen niedrigeren Funkressourcen-Steuerzustand zu implementieren, ungeachtet der Vorhersage und der Abschätzung, falls eine abgelaufene Zeit seit einem letzten Burst von Daten-Aktivität einen Grenzwert übersteigt.

10. Knoten nach Anspruch 7, wobei, falls die Bestimmung darin besteht, die Zustandsänderung nicht zu implementieren, der Funkressourcenmanager (40) dazu konfiguriert ist, eine andere Vorhersage des Datenübertragungsparameters zu treffen und dann 2) - 3) bezüglich der anderen Vorhersage auszuführen.

11. Knoten nach Anspruch 7, wobei, falls die Vorhersage anzeigt, dass der Datenübertragungsparameter einen ersten vorgegebenen Wert übersteigt, der Funkressourcenmanager (40) außerdem konfiguriert ist zum:
Implementieren der Zustandsänderung als eine Änderung in einen niedrigeren Funkressourcen-Steuerzustand, falls die Abschätzung die Vorhersage bestätigt; und
Nichtimplementieren der Zustandsänderung, falls die Abschätzung die Vorhersage nicht bestätigt.

12. Knoten nach Anspruch 7, wobei der Funkressourcenmanager (40) dazu konfiguriert ist, die Vorhersage als eine Wahrscheinlichkeit auszudrücken, dass der Parameter einen vorgegebenen Wert hat.

13. Knoten nach Anspruch 7, wobei der Datenübertragungsparameter die Zwischenankunftszeit zwischen Bursts von Datenaktivität ist und wobei der Funkressourcenmanager (40) dazu konfiguriert ist, die Vorhersage als eine Wahrscheinlichkeit auszudrücken, dass die Zwischenankunftszeit zwischen Bursts von Datenaktivität größer ist als eine vorgegebener Zeitwert.

## Revendications

1. Procédé de mise en oeuvre d'un noeud (26) d'un réseau d'accès radio (24) qui commande les transitions entre les états de commande de ressource radio pour un terminal sans fil (30), le procédé comprenant :
1) à la fin d'une activité de données, la prédiction (5-1) d'un paramètre de transmission de données, dans lequel le procédé comprend en outre :
2) l'estimation (5-2) de la précision probable de la prédiction, dans lequel l'estimation comprend la détermination que la précision probable de la prédiction dépasse un seuil de précision,
dans lequel le seuil de précision est sélectionné sur la base d'un coût pondéré d'une prise de décision erronée de commuter l'état de commande de ressource radio, et d'un coût pondéré d'une prise de décision erronée de ne pas commuter l'état de commande de ressource radio ; et
3) l'utilisation (5-3) de l'estimation pour déterminer s'il convient ou non de mettre en oeuvre un commutateur d'état de commande de ressource radio.

2. Procédé selon la revendication 1, dans lequel le paramètre de transmission de données comprend au moins l'un :
d'un temps entre arrivées entre les salves d'activité de données ; et
d'une taille de salve d'une salve d'activité de données.

3. Procédé selon la revendication 2, dans lequel le paramètre de transmission de données comprend le temps entre arrivées entre les salves d'activité de données, le procédé comprenant en outre :
la mise en oeuvre (8-2) du commutateur d'état dans un état de commande de ressource radio inférieur indépendamment de la prédiction et de l'estimation si un temps écoulé depuis une dernière salve d'activité de données dépasse une valeur limite.

4. Procédé selon la revendication 1, dans lequel, si la détermination (7-4) est de ne pas mettre en oeuvre le commutateur d'état, le procédé comprend en outre une autre prédiction (7-5) du paramètre de transmission de données et l'exécution ensuite des points 2) et 3) en relation avec ladite autre prédiction.

5. Procédé selon la revendication 1, dans lequel, si la prédiction indique que le paramètre de transmission de données dépasse une première valeur prédéterminée, le procédé comprend en outre :
la mise en oeuvre (6-4) du commutateur d'état en tant que commutateur dans un état de commande de ressource radio inférieur si l'estimation confirme la prédiction ; et
la non mise en oeuvre (6-5) du commutateur d'état si l'estimation ne confirme pas la prédiction.

6. Procédé selon la revendication 1, dans lequel la prédiction est exprimée en tant que probabilité que le paramètre ait une valeur prédéterminée.

7. Noeud d'un réseau d'accès radio (24) qui commande les transitions entre les états de commande de ressource radio pour un terminal sans fil (30), le noeud (26) comprenant :
un gestionnaire de ressource radio (40) configuré pour :
1) prédire un paramètre de transmission de données à la fin d'une activité de données ;
2) estimer la précision probable de la prédiction en déterminant que la précision probable de la prédiction dépasse un seuil de précision, dans lequel le seuil de précision est sélectionné sur la base d'un coût pondéré de prise de décision erronée de commuter l'état de commande de ressource radio, et d'un coût pondéré de prise de décision erronée de ne pas commuter l'état de commande de ressource radio ;
3) utiliser l'estimation pour déterminer s'il convient ou non de mettre en oeuvre un commutateur d'état de commande de ressource radio ; et
une interface de communication (41) par laquelle le noeud (26) notifie au terminal sans fil (30) s'il convient ou non de mettre en oeuvre le commutateur d'état.

8. Noeud selon la revendication 7, dans lequel le paramètre de transmission de données comprend au moins l'un :
d'un temps entre arrivées entre les salves d'activité de données ; et
d'une taille de salve d'une salve d'activité de données.

9. Noeud selon la revendication 8, dans lequel le paramètre de transmission de données comprend le temps entre arrivées entre les salves d'activité de données, et
dans lequel le gestionnaire de ressource radio (40) est configuré pour mettre en oeuvre le commutateur d'état dans un état de commande de ressource radio inférieur indépendamment de la prédiction et de l'estimation si un temps écoulé depuis une dernière salve d'activité de données dépasse une valeur limite.

10. Noeud selon la revendication 7, dans lequel, si la détermination est de ne pas mettre en oeuvre le commutateur d'état, le gestionnaire de ressource radio (40) est configuré pour effectuer une autre prédiction du paramètre de transmission de données et ensuite pour effectuer les points 2) et 3) en relation avec ladite autre prédiction.

11. Noeud selon la revendication 7, dans lequel, si la prédiction indique que le paramètre de transmission de données dépasse une première valeur prédéterminée, le gestionnaire de ressource radio (40) est en outre configuré :
pour mettre en oeuvre le commutateur d'état en tant que commutateur dans un état de commande de ressource radio inférieur si l'estimation confirme la prédiction ; et
pour ne pas mettre en oeuvre la décision de commutation si l'estimation ne confirme pas la prédiction.

12. Noeud selon la revendication 7, dans lequel le gestionnaire de ressource radio (40) est configuré pour exprimer la prédiction en tant que probabilité que le paramètre ait une valeur prédéterminée.

13. Noeud selon la revendication 7, dans lequel le paramètre de transmission de données est le temps entre arrivées entre les salves d'activité de données, et dans lequel le gestionnaire de ressource radio (40) est configuré pour exprimer la prédiction en tant que probabilité que le temps entre arrivées entre les salves d'activité de données soit supérieur à une valeur de temps prédéterminée.
